# EUROPEAN PATENT APPLICATION

(11) **EP 3 729 964 A1**
(43) Date of publication of application: **28.10.2020**
(21) Application number: 20170490.5
(22) Date of filing: 21.04.2020
(51) Int. Cl.: A01N 1/02

(54) **APPARATUS TO ENCAPSULATE A CRYOBAG DURING STORAGE AND SHIPPING**

(30) Priority: 22.04.2019 US 201962836828 P
(71) Applicant: Forge, LLC, West Greenwich, RI 02817 (US)
(72) Inventor: Leary, Jack, West Greenwich, RI Rhode Island 02817 (US); Macey, Cory, West Greenwich, RI Rhode Island 02817 (US)
(74) Representative: Lorente Berges, Ana

(57) **Abstract**

An apparatus (foam-lined cassette 100) to cradle and support a cryo-bag during control rate freezing, storage, shipping, throughout the cold-chain, and in the event of a drop or impact during handling. The cassette lid (102) is at the top of the apparatus, lined with a foam pad capable of withstanding cryogenic temperatures. The lower body (104) of the apparatus is also lined and includes an internal pocket (108) made of the same cryogenically compatible foam material where the cryo-bag can be inserted and cradled snugly. The internal pocket makes a "sandwich" type configuration to prevent any movement of the sample once the cassette is locked, shields the cryo-bag from contacting the hard shell of the cassette, and absorbs any impact forces realized during handling or dropping of the cassette. The cassette is secured with a latch (106).

## Description

### BACKGROUND OF THE INVENTION

### Field of the Invention

The present invention relates in general to apparatuses and methods involved in the cryo-preservation and protection of cryogenic freezing bags (cryo-bags) and their contents during storage and shipping.

### Description of the Related Art

Cryogenic preservation is frequently necessary for research and clinical biotechnology applications. Advanced cryopreservation technologies provide techniques to cryo-preserve stem cells, plant cells, embryos, unfertilized eggs, vaccines, small multi-cellular organisms, tissue cultures, bacterial, viral cultures, cell therapies, and spermatozoa for future use. The typical method of cryo-preservation is commonly initiated by controlled rate freezing whereby a collected sample of cells at room or body-temperature is slowly brought to cryogenic temperatures (below-150°C). Once these biological samples are at or below -150°C, the sample contained or enclosed in the sample container is intended to be stored in the vapor or liquid phase of a cryogenic storage unit. It is paramount to a) maintain and control cryogenic conditions during the cryopreservation process and b) protect the sample and cryo-bag from breakage throughout the time that the sample is stored, required (for surgery, transplant, cell therapy, IVF etc.), and transported. If either of these conditions fail (due to a rise in temperature during controlled rate freezing, storage or bag breakage in transport), viability and integrity of said sample may be compromised and eliminated completely. Further, both conditions must **be met throughout the "cold-chain," an uninterrupted control of the integrity and temperature** of the sample from cryo-production to storage, shipment, delivery, and final thaw of product.

Heretofore, standard lab practices have commonly adopted enclosing cryo-bags containing the biological sample in aluminum cassettes for protection, and place cassettes containing the cryo-bag into a cryogenic tank (with cassettes either submerged in liquid nitrogen or stored in vapor phase of liquid nitrogen at similar temperature) until they are needed in the lab or need to be shipped. Although storage and shipping of cryogenically preserved cells and tissues is widely practiced, very little work has been done to improve the safety and the ultimate downstream effects to the samples during packaging, transporting, and handling of samples enclosed in cryo-bags and cassettes from the initial preparation of controlled rate freezing through storage and transportation.

Cryogenically preserved cells at volumes (usually over 25mL) are stored in cryogenic freezing **bags, nicknamed "cryo-bags." These cryo**-bags come in a variety of shapes and sizes, look similar to a blood collection bag, and are made of material capable of withstanding cryogenic temperatures indefinitely. Despite the material and design, cryo-bags will become brittle in a cryogenic environment, susceptible to breaking and/or tearing if dropped or handled incorrectly, and must be protected. Much like a compact disc or DVD being stored in a plastic case, cryobags are stored in aluminum cassettes to protect, organize storage, inventory, and house the sample. The proper fit and sizing between the cassette and cryo-bag is crucial; if the bag does not fit snugly within the cassette, any sliding or movement of the bag can lead to breakage when being handled, shipped, etc.

Current cassettes available in the market do not effectively address the above issues. Bag breakage, particularly during shipping and handling, is a significant problem and concern for the industry. Efforts have been made to improve the shipping canisters, but little has been done to address cassette design and function. Current available options for cryogenic shipping leave biological samples prone to physical damage due to rough handling during routine shipping. If the cryo- bag does not fit properly inside the cassette, moves too much during transport, experiences rugged handling (which is often the case in handling of shipments through commercial agents), or if the cassette or shipping container is accidentally dropped, the bag may strike back and forth within the walls of the cassette, shipping container, or both. Cryo-bags are not able to bear this level of shock under cryogenic conditions and will likely break. Such a breakage would not only contaminate and compromise the sample, cost potentially hundreds of thousands of dollars to replace, but could literally have an effect in successfully providing a life changing treatment for someone waiting for a therapy or transplant.

In order to overcome the aforementioned problems, there is a strong need and demand for a low-cost, easy to maintain, reliable apparatus and method to enclose, protect, and store cryo-bags in a manner that is conducive to controlled rate freezing, supports the bag during storage in the liquid phase or vapor phase of liquid nitrogen, and prevents potentially damaging contact with the outer cassette in the event of a drop or impact during storage and shipping.

### SUMMARY OF THE INVENTION

The present invention overcomes the problems outlined above by providing an apparatus (foam-lined cassette) to cradle and support the cryo-bag during control rate freezing, storage, shipping, throughout the cold-chain, and in the event of a drop or impact during handling. The cassette lid is at the top of the apparatus, lined with a foam pad capable of withstanding cryogenic temperatures. The lower body of the apparatus is also lined and includes an internal pocket made of the same cryogenically compatible foam material where the cryo-bag can be inserted and cradled snugly. The internal pocket makes a "sandwich" type configuration to prevent any movement of the sample once the cassette is locked, shields the cryo-bag from contacting the hard shell of the cassette, and absorbs any impact forces realized during handling or dropping of the cassette. Pocket size is sculpted or molded into the foam according to cryo-bag size, and fill volume of the cryo-bag. The cassette is locked with a latch so that it

### will not open without one's intention to do so.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof.

### BRIEF DESCRIPTION OF THE DRAWINGS

FIG. 1 illustrates the cassette in an open position, with view of the interior of the cassette;
FIG. 2 illustrates the cassette with cryo-bag inserted into the cassette;
FIG. 3 illustrates the apparatus with top lid closed and latch open; and
FIG. 4 illustrates the apparatus with cassette closed and latch closed or in a locked position.

### DETAILED DESCRIPTION OF THE SEVERAL EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The embodiments herein achieve this by providing an apparatus (**100**) enclosing cryo-bags (**110**) during storage and shipping to encapsulate or cradle the cryo-bags (**110**) in a manner to support the bag (**110**) and prevent its contact with the outer cassette in the event of a drop or impact during shipping, handling, or regular use of the cryogenic cells and tissues housed inside the bag (**110**).

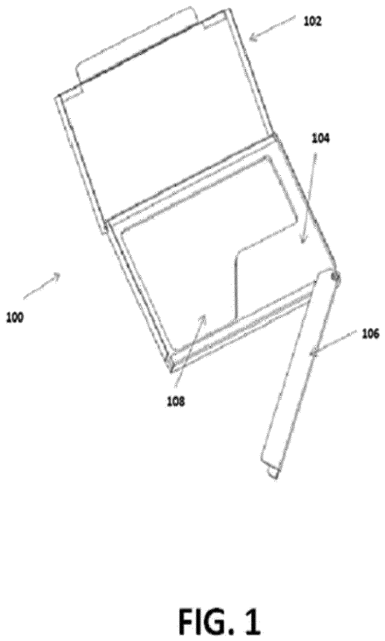

Fig 1 is an illustration of an open, foam-lined cassette **(100).** The cryogenic compatible foam-lined cassette lid (**102**) is provided at the top of the cassette (**100**). The bottom piece **(104)** of the cassette **(100)** is also lined with cryogenic compatible foam, with an internal pocket **(108)** or depression sculpted into the foam. This internal pocket (**108**) is cut out of a foam pad existing in the bottom piece of the cassette **(104)**, fit to the specific cryo-bag being used. The apparatus (**100**) design disclosed in the present invention utilizes internal pocket (**108**) cut and made out of cryogenically compatible foam material whereby the cryo-bag (**110**) can be inserted into the cassette. The internal pocket (**108**) makes a sandwich type configuration to shield the cryo-bag (**110**) from contacting the hard shell of the cassette and also absorbs any impact forces realized during shipping, handling, or regular use of the cassette. The cassette is secured with a latch (**106**) so **that the cassette will not open without one's intention** to do so. This apparatus (**100**) based design is not limited to the use of a standard outer cassette; additional outer shell designs are possible however they all share the internal pocket (**108**) feature. Clearances are such that cryogenically compatible foam creates a sandwich type configuration. During the freezing process, the fluid in the cryogenic cells bag (**110**) expands which creates further depressions in the cryogenically compatible foam internal pocket (**108**) which helps to hold it in place during storage and transportation.

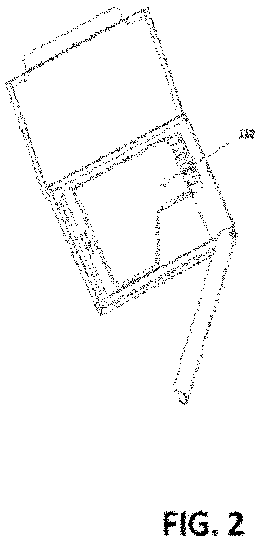

Fig 2 is an illustration of the apparatus, open, with a cryo-bag (**110**) inserted into the foam pocket **(108).**

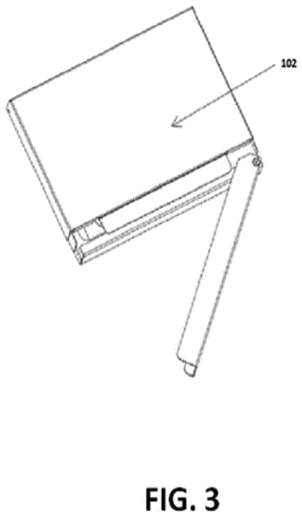

Fig 3 illustrates the cassette with the top lid **(102)** closed, and latch **(106)** open. In this position, the cryo-bag is tightly snug between the foam lining the top interior **(102)** and the foam pocket **(108).**

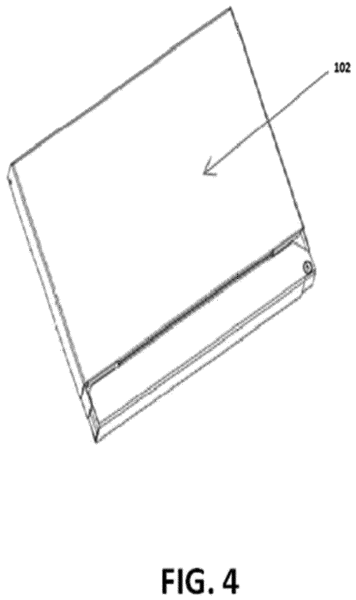

Fig. 4 illustrates the apparatus (**100**) with cassette latch (**106**) closed. The latch (**106**) locks the cassette so that it will not **open without one's intent (not during any normal or rough** handling).

As mentioned, there remains the foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments.

It is to be understood, however, that even though numerous characteristics and advantages of the present invention have been set forth in the foregoing description, together with details of the structure and function of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. An apparatus to encapsulate or cradle a cryo-bag during controlled rate freezing, storage, and shipping comprising:
a cryogenic compatible foam-lined cassette outer shell;
a cryogenic compatible foam-lined cassette lid;
a cryogenic compatible foam-lined bottom piece;
an internal pocket; and
a latch;
wherein the cassette lid is at the top of the cassette, lined with a foam pad capable of withstanding cryogenic temperatures;

2. The apparatus to encapsulate or cradle a cryo-bag according to claim 1, wherein the size of the internal pocket is sculpted or molded into the foam based on the size and fill volume of the cryo-bag.

3. The apparatus to encapsulate or cradle a cryo-bag according to claim 1, wherein the internal pocket is cut out of a foam pad existing in the bottom piece of the cassette.

4. The apparatus to encapsulate or cradle a cryo-bag according to claim 1, wherein the **internal pocket makes a "sandwich" type configuration to prevent any movement of the sample** once the cassette is locked, and to absorb any impact forces realized during handling of the apparatus.

5. The apparatus to encapsulate or cradle a cryo-bag according to claim 1, wherein the latch locks the cassette so that it will not open without a user'**s intent.**
